# EUROPÄISCHE PATENTSCHRIFT

(11) **EP 3 475 162 B1**
(45) Veröffentlichungstag und Bekanntmachung des Hinweises auf die Patenterteilung: **06.10.2021**
(21) Anmeldenummer: 17757688.1
(22) Anmeldetag: 17.07.2017
(51) Int. Cl.: B63G 8/08, B63H 21/17, H02K 9/19, H02K 9/24, H02K 11/33

(54) **ANTRIEB FÜR EIN WASSERGEBUNDENES FORTBEWEGUNGSMITTEL**
DRIVE FOR A WATERBOUND MEANS OF TRANSPORT
DISPOSITIF D'ENTRAÎNEMENT CONÇU POUR UN MOYEN DE LOCOMOTION HYDRAULIQUE

(30) Priorität: 13.09.2016 DE 102016217436
(43) Veröffentlichungstag der Anmeldung: 01.05.2019
(73) Patentinhaber: Siemens Energy Global GmbH & Co. KG, 81739 München (DE)
(72) Erfinder: ECKERT, Jürgen, 91085 Weisendorf (DE); SCHLAPPA, Robert, 91315 Höchstadt a.d. Aisch (DE)
(86) Internationale Anmeldenummer: PCT/EP2017/068002
(87) Internationale Veröffentlichungsnummer: WO 2018/050316

(56) Entgegenhaltungen:
- US-A1- 2006 125 332

## Beschreibung

Die Erfindung betrifft einen Antrieb für ein wassergebundenes Fortbewegungsmittel. Ein Schiff oder ein U-Boot sind Beispiele für wassergebundene Fortbewegungsmittel.

Unterseeboote oder Schiffe werden häufig mit Elektroantrieben betrieben, welche die Schraube, also den Propeller des Unterseeboots oder des Schiffs antreiben.

Zur Kühlung des Antriebs ist beispielsweise eine Kühlmittelpumpe vorgesehen. Mit Hilfe der Kühlmittelpumpe lassen sich z.B. Kühlkanäle eines Stators der elektrischen Maschine oder eine Kühleinrichtung wie einen Wärmetauscher für Kühlluft mit Kühlflüssigkeit beschicken. Eine Kühlmittelpumpe bildet zusammen mit einem elektrischen Motor ein Pumpenaggregat. Fällt die Kühlpumpe aus, so kann der Antrieb nicht mehr betrieben werden oder nur noch mit deutlich reduzierter Leistung.

Aus der DE 102 43 775 A1 ist eine redundante Kühlvorrichtung für einen elektrischen U-Boot-Antriebsmotor, der einen ersten Kühlkreislauf und einen zweiten Kühlkreislauf, mittels denen Wärmeenergie vom elektrischen U-Boot-Antriebsmotor abtransportierbar ist, bekannt.

Aus der US2006/0125332 A1 ist eine redundante Kühlvorrichtung für einen elektrischen U-Boot Antriebsmotor bekannt, welcher einen ersten Kühlkreislauf und einen zweiten Kühlkreislauf aufweist. Mit diesen kann Wärmeenergie vom elektrischen U-Boot-Antriebsmotor abgeführt werden. Ein hohes Maß an Betriebssicherheit und Redundanz können gewährleistet sein, wenn das Kühlmittel im ersten Kühlkreislauf und im zweiten Kühlkreislauf im Gegenstrom durch einen Statorkühlkreislauf im Bereich des elektrischen U-Bootes Antriebsmotors fließen. Eine Aufgabe der Erfindung ist es, einen Antrieb eines Unterseeboots oder eines Schiffs anzugeben, welcher eine sichere Kühlung aufweist bzw. eine Erhöhung der Verfügbarkeit der Antriebsanlage auf einem U-Boot oder einem Schiff insbesondere ohne zusätzliche Pumpenaggregate ermöglicht. Durch eine sichere Kühlung wird die Einsatzfähigkeit z.B. des Unterseeboots oder des Schiffes verbessert.

Eine Lösung der Aufgabe ergibt sich bei einem Antrieb nach Anspruch 1, einem wassergebundenen Fortbewegungsmittels nach Anspruch 7 , und bei einem Verfahren nach Anspruch 8 . Ausgestaltungen der Erfindung ergeben sich nach den abhängigen Ansprüchen 2 bis 6 und 9 bis 12..

Ein Antrieb eines wassergebundenen Fortbewegungsmittels, wie ein Unterseeboot oder ein Schiff, weist eine elektrische Maschine, eine erste Kühlmittelpumpe, eine zweite Kühlmittel pumpe, einen ersten Kühlmittelkreislauf und einen zweiten Kühlmittelkreislauf auf, wobei die erste Kühlmittelpumpe oder die zweite Kühlmittelpumpe mit dem ersten Kühlmittelkreislauf und mit dem zweiten Kühlmittelkreislauf koppelbar ist.

Der Antrieb des wassergebundenen Fortbewegungsmittels weist einen Elektromotor als elektrische Maschine auf. Der Elektromotor kann beispielsweise motorisch, wie auch generatorisch betrieben werden und wird beispielsweise als Antriebsmotor für die Welle des wassergebundenen Fortbewegungsmittels verwendet, mit der ein Propeller angetrieben werden kann. Zur Kühlung des Elektromotors ist beispielsweise Kühlluft oder eine Kühlflüssigkeit vorgesehen. Die Kühlung mit Kühlflüssigkeit kann beispielsweise direkt oder indirekt erfolgen. Bei einer direkten Kühlung mit Kühlflüssigkeit wird diese beispielsweise durch Kühlkanäle im Stator der elektrischen Maschine geführt. Bei einer indirekten Kühlung mit Kühlflüssigkeit wird beispielsweise Kühlluft durch Kühlkanäle im Stator geführt und die Kühlluft in einem Wärmetauscher, welcher mit Kühlflüssigkeit beschickt wird, durch die Kühlflüssigkeit gekühlt.

In einer Ausgestaltung des Antriebs, wird bei einem Ausfall eines Pumpenaggregates, welches eine Kühlmittelpumpe und einen Motor zum Antrieb der Kühlmittelpumpe aufweist, der Antrieb des Schiffes bzw. des U-Bootes mit einem verbleibenden Pumpenaggregat betrieben. So kann der Vortrieb des Wasserfahrzeuges sichergestellt werden. Ohne weitere Anpassungen des verbliebenen aktiven Pumpenaggregates führt dies allerdings zu einer Reduktion der maximal abgebbaren Leistung des gesamten Antriebsmotors, da die Kühlkapazität reduziert ist. Diese Leistungseinschränkung mindert die Einsatzmöglichkeiten des U-Bootes bzw. Schiffes.

Um die Ausfallsicherheit des Antriebes zu erhöhen, kann auch die Redundanz der beim Antrieb verwendeten Komponenten erhöht werden. So ist eine Erhöhung der Anzahl der Pumpenaggregate möglich. Hierfür ist allerdings die räumliche Integration zu berücksichtigen, zumal es beispielsweise auf einem U-Boot beengte Verhältnisse gibt. Eine erhöhte Redundanz durch zusätzliche Komponenten wie z.B. mehr Pumpenaggregate führt zu einem erhöhten Verrohrungsaufwand und auch zu erhöhten Kosten.

In einer Ausgestaltung des Antriebs ist der erste Kühlmittelkreislauf mit dem zweiten Kühlmittelkreislauf über ein Ventil koppelbar. Zwei unabhängige interne Kühlkreisläufe des Antriebs eines Schiffes oder U-Bootes können über ein Koppelventil miteinander verbunden werden, so dass das verbleibende Pumpenaggregat beide Kühlkreisläufe mit Kühlmedium versorgt. Ohne weitere Anpassung ist damit beispielsweise eine Steigerung des Abgabemoments, also der Kühlleistung von ca. 50% auf ca. 65% möglich.

In einer Ausgestaltung des Antriebs ist der erste Kühlmittelkreislauf und/oder der zweite Kühlmittelkreislauf zur Kühlung der elektrischen Maschine vorgesehen. Der oder die Kühlkreisläufe können auch zur Kühlung eines oder mehrerer Stromrichter vorgesehen sein.

Erfindungsgemäß ist die erste Kühlmittelpumpe sowohl mit der ersten Kühlmittelpumpenversorgung betreibbar als auch mit der zweiten Kühlmittelpumpenversorgung. Die Kühlmittelpumpenversorgungen weisen eine Stromversorgung für die elektrische Maschine der jeweiligen Kühlmittelpumpe auf. Die Stromversorgung weist beispielsweise einen Wechselrichter auf, welcher die elektrische Maschine der jeweiligen Kühlmittelpumpe speist.

In einer Ausgestaltung des Antriebs ist nicht nur die erste Kühlmittelpumpe sowohl mit der ersten Kühlmittelpumpenversorgung betreibbar wie auch mit der zweiten Kühlmittelpumpenversorgung sondern die zweite Kühlmittelpumpe ist auch sowohl mit der ersten Kühlmittelpumpenversorgung betreibbar wie auch mit der zweiten Kühlmittelpumpenversorgung.

Damit lässt sich eine redundante Kühlmittelpumpenanbindung an den Antrieb realisieren. Dies ist beispielsweise bei permanentmagneterregten Synchronmaschinen als Antrieb für ein U-Boot realisierbar.

Durch eine redundante Kühlmittelpumpenanbindung kann eine Erhöhung der funktionalen Verfügbarkeit des Antriebsmotors für das wassergebundene Fortbewegungsmittel bei einer Fehlfunktion einer Kühlmittelpumpenversorgung bzw. einer Kühlmittelpumpe erzielt werden. So kann beispielsweise vermieden werden, dass bei einer Fehlfunktion einer Kühlmittelpumpenversorgung die Kühlleistung dieses Kühlkreises komplett ausfällt. Dies würde nämlich zu einer Reduzierung der maximal abzugebenden Leistung des gesamten Fahrmotors (Antriebsmotors) führen. Diese Leistungseinschränkung mindert die Einsatzmöglichkeiten des wassergebundenen Fortbewegungsmittels, wie es z.B. ein Unterseeboot darstellt.

In einer Ausgestaltung des Antriebs weist die erste Kühlmittelpumpenversorgung einen Stromrichter auf, welcher mit der ersten Kühlmittelpumpe und/oder mit der zweiten Kühlmittelpumpe verschaltbar ist. Der Stromrichter ist insbesondere ein Wechselrichter. Der Stromrichter kann im Folgenden auch als erster Stromrichter bezeichnet werden. Die Verschaltung erfolgt beispielsweise durch Schütze. Durch den Stromrichter der ersten Kühlmittelpumpenversorgung kann also die erste Kühlmittelpumpe alleine gespeist werden, oder die zweite Kühlmittelpumpe alleine gespeist werden oder die erste und die zweite Kühlmittelpumpe gemeinsam gespeist werden.

In einer Ausgestaltung des Antriebs weist die zweite Kühlmittelpumpenversorgung einen weiteren Stromrichter auf, welcher mit der ersten Kühlmittelpumpe und/oder mit der zweiten Kühlmittelpumpe verschaltbar ist. Der weitere Stromrichter kann im Folgenden auch als zweiter Stromrichter bezeichnet werden. Auch der weitere Stromrichter ist insbesondere ein Wechselrichter. Die Verschaltung erfolgt beispielsweise durch Schütze. Durch den weiteren Stromrichter, also den Stromrichter zweiten Kühlmittelpumpenversorgung kann also die erste Kühlmittelpumpe alleine gespeist werden, oder die zweite Kühlmittelpumpe alleine gespeist werden oder die erste und die zweite Kühlmittelpumpe gemeinsam gespeist werden.

In einer Ausgestaltung des Antriebes ist das erste Pumpenaggregat mit der ersten Kühlmittelpumpe und dem zugehörigen ersten Pumpenantriebsmotor, sowie das zweite Pumpenaggregat mit der zweiten Kühlmittelpumpe und dem zugehörigen zweiten Pumpenantriebsmotor derart ausgelegt, dass der jeweilige Pumpenantriebsmotor derart ausgelegt ist, dass dieser die Kühlmittelpumpe dauerhaft mit einer Durchflussleistung von größer 80% des Maximaldurchflusses antreiben kann.

Ein wassergebundenes Fortbewegungsmittels, insbesondere ein Unterseeboot oder ein Schiff, weist einen Antrieb nach einem der beschriebenen Ausgestaltungen auf, um so die Einsatzfähigkeit des Wasserfahrzeuges auch in einem Fehlerfall besser zu gewähren. Ein möglicher Fehlerfall ist beispielsweise ein Ausfall einer Kühlmittelpumpe oder ein Ausfall eines Pumpenantriebsmotors. Dies kann eines der beschriebenen Verfahren mit einbinden.

Nach einem Verfahren zum Betrieb eines Antriebs wird von der ersten Kühlmittelpumpe oder von der zweiten Kühlmittelpumpe der erste Kühlmittelkreislauf und der zweite Kühlmittelkreislauf mit Kühlmittel beschickt. Das Kühlmittel ist insbesondere eine Flüssigkeit wie Wasser. So können durch eine Kühlmittelpumpe, also durch ein Pumpenaggregat zwei Kühlmittelkreisläufe betrieben werden.

In einer Ausgestaltung des Verfahrens wird ein Motor, welcher die Kühlmittelpumpe antreibt, in Überlast betrieben, wenn mit dieser Kühlmittelpumpe alleine der erste Kühlkreislauf und der zweite Kühlkreislauf beschickt wird. So kann zumindest für eine kurze Zeit die Kühlleistung nahe an der Nennkühlleistung gehalten werden.

In einer Ausgestaltung des Verfahrens wird ein Pumpenaggregat, welches eine Kühlmittelpumpe aufweist, welche den ersten Kühlkreislauf und den zweiten Kühlkreislauf beschickt, mit mehr als 80% der Maximalleistung betrieben. Die Effizienz ist zwar bei einer Leistung von 80% der Maximalleistung nicht optimal, aber so kann zumindest die Kühlleistung auf einem hohen Niveau gehalten werden. Dies wird insbesondere so lange durchgeführt, bis ein ausgefallenes, stillgelegtes und/oder defektes weiteres Pumpenaggregat ersetzt bzw. repariert ist.

Bei Ausfall eines Pumpenaggregates können die Kühlkreisläufe eines Antriebs verbunden werden. So kann durch Erhöhung der Drehzahl des verbleibenden Pumpenaggregates der Volumenstrom und somit die Kühlleistung gesteigert werden, so dass insbesondere die Reduktion des maximal möglichen Abgabemomentes minimiert wird. Die Kühlleistung, welche gesteigert wird, betrifft diejenige, welche durch das verbleibende Pumpenaggregat bereitgestellt wird. Die Drehzahlerhöhung wird beispielsweise durch die Reduzierung des Erregerstromes bzw. durch Erhöhung der Umrichterfrequenz ermöglicht.

Durch eine Erhöhung des Abgabemomentes des Pumpenaggregates auf >90% im Fehlerfall eines anderen Pumpenaggregates kann die Einsatzbereitschaft eines Schiffes bzw. eines U-Bootes in hohem Maß erhalten bleiben.

Durch eine geänderte Versorgung der Pumpenmotoren durch Reduzierung des Erregerstromes bzw. durch Erhöhung der Umrichterfrequenz kann die Kühlleistung für den Antrieb des Schiffes bzw. des U-Bootes auf hohem Niveau gehalten werden. Durch das erhöhte Abgabemoment des Antriebsmotors im Fehlerfall, d.h. bei Ausfall eines Pumpenaggregates, ergibt sich ein Nutzen beim Betrieb des Schiffes oder U-Bootes im Vergleich zu dem Fall in dem im Fehlerfall der Betrieb des verbleibenden Pumpenaggregates nicht geändert wird.

In einer Ausgestaltung des Verfahrens wird ein Pumpenaggregat, welches eine Kühlmittelpumpe aufweist, welche den ersten Kühlkreislauf und den zweiten Kühlkreislauf beschickt, in einem Bereich betrieben, in dem der Wirkungsgrad des Pumpenaggregates mit einer Zunahme der Leistungsaufnahme sinkt. Dies bedeutet, dass beispielsweise im Normalbetreib zwei Pumpenaggregate zumindest nahe an einem Betriebspunkt mit hoher Effizienz betrieben werden. Fällt eines der Aggregate aus, wird die Leistung des verbleibenden Pumpenaggregates erhöht um zumindest nur einen kleinen Einbruch in der Kühlleistung zu erhalten. Dafür können Kühlkreisläufe welche vorher einzeln den Pumpaggregaten zugeordnet waren zusammengeschlossen werden und nur noch dem einen funktionierenden Pumpenaggregat zugeordnet sein.

Die Erfindung wird nachfolgend beispielhaft anhand von Figuren beschrieben. Dabei zeigt:
- FIG 1: einen Antrieb mit redundanter Kühlung bzw. mit redundanter Kühlmittelpumpenversorgung;
- FIG 2: ein U-Boot mit einem Antrieb und
- FIG 3: ein Schiff mit einem Antrieb.

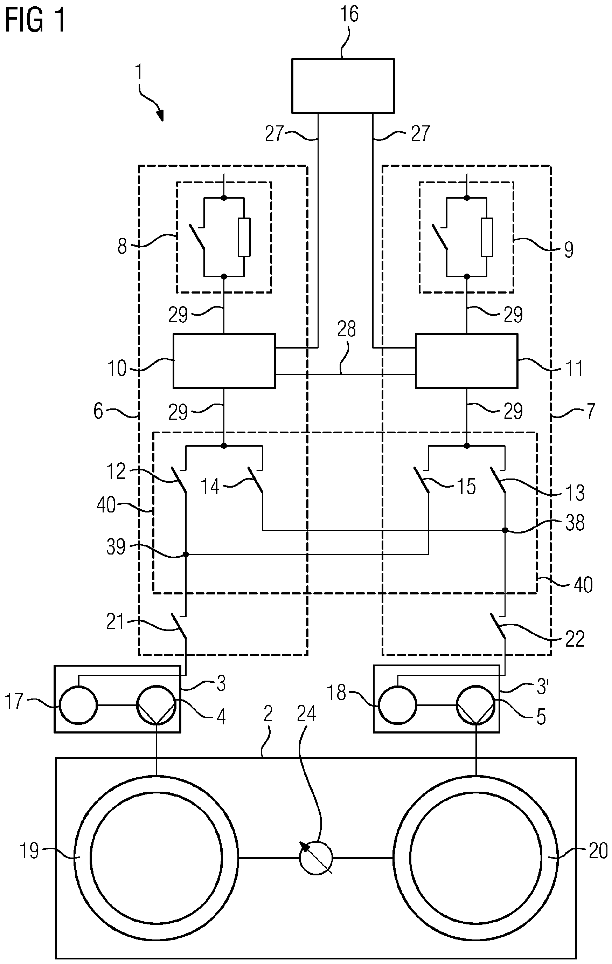

Die Darstellung nach FIG 1 zeigt einen Antrieb 1 mit redundanter Kühlung bzw. mit redundanter Kühlmittelpumpenversorgung 6 und 7. Der Antrieb 1 weist einen Elektromotor 2 als elektrische Maschine auf, welcher z.B. motorisch bzw. generatorisch betreibbar ist. Der Elektromotor 2 treibt beispielsweise einen Propeller an, welcher in FIG 1 allerdings nicht dargestellt ist. Zur Kühlung der elektrischen Maschine 2 ist eine erste Kühlmittelpumpe 4 und eine zweite Kühlmittelpumpe 5 vorgesehen. Der ersten Kühlmittelpumpe 4 ist ein erster Pumpenantriebsmotor 17 zugewiesen. Der zweiten Kühlmittelpumpe 5 ist ein zweiter Pumpenantriebsmotor 18 zugewiesen. Die erste Kühlmittelpumpe 4 bildet zusammen mit dem ersten Pumpenantriebsmotor 17 ein Pumpenaggregat 3. Auch die zweite Kühlmittelpumpe 5 bildet zusammen mit dem zweiten Pumpenantriebsmotor 18 ein Pumpenaggregat 3'. Der Elektromotor 2, welcher einen Stator und einen Läufer aufweist, welche nicht dargestellt sind, weist einen ersten Kühlkreislauf 19 und einen zweiten Kühlkreislauf 20 auf. Über ein Koppelventil 24 kann der erste Kühlkreislauf 19 mit dem zweiten Kühlkreislauf 20 gekoppelt werden oder entkoppelt werden. Der erste Kühlkreislauf 19 und der zweite Kühlkreislauf 20 können zur Kopplung parallel oder seriell geschalten werden. Sind die Kühlkrcisläufe 19 und 20 entkoppelt, so ist der erste Kühlkreislauf 19 durch das Pumpenaggregat 3 mit der ersten Kühlmittelpumpe 4 und dem ersten Pumpenantriebsmotor 17 beschickt und der zweite Kühlkreislauf 20 durch das Pumpenaggregat 3' mit der zweiten Kühlmittelpumpe 5 und dem zweiten Pumpenantriebsmotor 18 beschickt. Das Kühlmedium ist beispielsweise eine Flüssigkeit wie Wasser oder ein Öl. Der Antrieb 1 weist für die Kühlung einen ersten Stromrichter 10 und einen zweiten Stromrichter 11 für die Pumpenaggregate 3 und 3' auf. Die Stromrichter 10 und 11 sind insbesondere Wechselrichter oder Umrichter. Über Leistungskabel 29 werden die Pumpenaggregate 3 und 3' durch die Stromrichter 10 und 11 mit elektrischer Energie versorgt. Der erste Stromrichter 10 ist mit dem ersten Pumpenantriebsmotor 17 über ein erstes Hauptschütz 12 und einen ersten Trennschalter 21 verbunden. Der zweite Stromrichter 11 ist mit dem zweiten Pumpenantriebsmotor 18 über ein zweites Hauptschütz 13 und einen zweiten Trennschalter 22 verbunden. Der erste Stromrichter 10 ist mit dem zweiten Pumpenantriebsmotor 18 über ein erstes Umschaltschütz 14 und den zweiten Trennschalter 22 verbindbar. Der zweite Stromrichter 11 ist mit dem ersten Pumpenantriebsmotor 17 über ein zweites Umschaltschütz 15 und den ersten Trennschalter 21 verbindbar. Das erste Hauptschütz 12 ist in Reihe mit dem ersten Trennschalter 21. Das zweite Hauptschütz 13 ist in Reihe mit dem zweiten Trennschalter 22. Das erste Umschaltschütz 14 ist zwischen dem ersten Stromrichter 10 und einem Knoten 38. Der Knoten 38 ist zwischen dem zweiten Hauptschütz 13 und dem zweiten Trennschalter 22. Das erste Hauptschütz 12 ist in Reihe mit dem ersten Trennschalter 21. Das zweite Umschaltschütz 15 ist zwischen dem zweiten Stromrichter 11 und einem Knoten 39. Der Knoten 39 ist zwischen dem ersten Hauptschütz 12 und dem ersten Trennschalter 21. Auf diese Weise lässt sich der erste Stromrichter 10 mit dem ersten Pumpenantriebsmotor 17 und/oder mit dem zweiten Pumpenantriebsmotor 18 elektrisch verbinden. Auf diese Weise lässt sich auch der zweite Stromrichter 11 mit dem ersten Pumpenantriebsmotor 17 und/oder mit zweiten Pumpenantriebsmotor 18 elektrisch verbinden. So können die Stromrichter 10 und 11 redundant ausgelegt werden, da beide in der Lage sind die Kühlmittelpumpen 4 und 5 elektrisch zu versorgen. In einer Ausgestaltung sind die Stromrichter 10 und/oder 11 bezüglich Ihrer Leistung derart ausgelegt, dass diese nur zusammen gewährleisten eines der Pumpenaggregate mit zumindest 80% der Maximalleistung zu betreiben. Für den fehlerfreien Betrieb sind die Stromrichter 10 und 11 so ausgelegt, dass diese die Pumpenaggregate 3 und 3' jeweils im Bereich der maximalen Effizienz bestromen können.

Die Stromrichter 10 und 11 können beispielsweise über eine Kommunikationsverbindung 28 verbunden werden. Diese kann beispielsweise für eine Synchronisation genutzt werden. Der erste Stromrichter 10 wird über ein erstes Vorladeschütz 8 gespeist. Der zweite Stromrichter 11 wird über ein zweites Vorladeschütz 9 gespeist. Die Regelung und/oder Steuerung des ersten Stromrichters 10 und des zweiten Stromrichters 11 erfolgt mittels einer Steuerung 16. Hierfür ist der erste Stromrichter 10 und der zweite Stromrichter 11 jeweils über eine Kommunikationsverbindung 27, wie beispielsweise ein Kommunikationskabel, mit der Steuerung 16 datentechnisch verbunden.

Die erste Kühlmittelpumpenversorgung 6 weist das erste Vorladeschütz 8, den ersten Stromrichter 10, das erste Hauptschütz 12, den ersten Trennschalter 21 und das erste Umschaltschütz 14 auf. Die zweite Kühlmittelpumpenversorgung 7 weist das zweite Vorladeschütz 9, den zweiten Stromrichter 11, das zweite Hauptschütz 13, den zweiten Trennschalter 22 und das zweite Umschaltschütz 15 auf. Die Verschaltung von Hauptschützen 12, 13 und Umschaltschützen 14, 15 ergibt eine Verschaltung 40.

Durch die in der FIG 1 dargestellte Verschaltungslogik ist es möglich, bei einer Fehlererkennung in einer Kühlmittelpumpenversorgung den defekten Kühlmittelpumpenversorgungsstrang auf die noch verfügbare Kühlmittelpumpenversorgung aufzuschalten. Die Konzeption der Auslegung der Versorgungseinheiten, also insbesondere der Stromrichter, erfolgt beispielsweise so, dass ein redundanter Betrieb gewährleistet wird. So kann der erste Stromrichter 10 so ausgelegt werden, dass mit diesem die erste Kühlmittelpumpe 4 und die zweite Kühlmittelpumpe 5 mit Nennleistung betrieben werden können. So kann allerdings auch der zweite Stromrichter 11 so ausgelegt werden, dass mit diesem die erste Kühlmittelpumpe 4 und die zweite Kühlmittelpumpe 5 mit Nennleistung betrieben werden können. So kann trotz einer Fehlfunktion einer Kühlmittelpumpenanschaltung, bzw. eines Stromrichters, bzw. einer Kühlmittelpumpenversorgung 6, 7 erreicht werden, dass die elektrische Maschine 2, also z.B. ein Fahrmotor eines Unterseebootes, nicht mehr eingeschränkt ist. Die Einschränkung ergäbe sich z.B. durch eine nicht ausrechende Kühlung für einen Nennbetrieb des Fahrmotors oder für einen Betrieb des Fahrmotors mit maximaler Leistung. Der Fahrmotor kann beispielsweise auch ein Fahrmotor eines Schiffes sein, wie beispielsweise ein Containerschiff, ein Passagierschiff, eine Fregatte, ein Frachter oder dergleichen. Die Kühlmittelpumpenversorgung 6, 7 ist redundant konzipiert und umgesetzt.

Die in der FIG 1 verwendeten Bezugszeichen werden auch in den nachfolgenden Beschreibungen der weiteren Figuren verwendet, wobei gleiche Bezugszeichen für gleichartige Elemente verwendet werden.

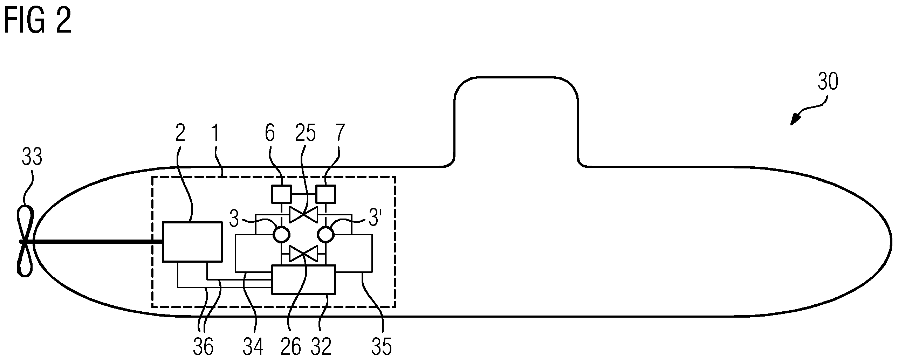

Die Darstellung nach FIG 2 zeigt ein U-Boot 30 mit einem Antrieb 1 mit einer elektrischen Maschine 2 zum Antrieb eines Propellers 33. Über einen primären Kühlmittelkreislauf 36 ist die elektrische Maschine 2 durch einen Wärmetauscher 32 kühlbar. Die Pumpenaggregate 3 und 3' treiben sekundäre Kühlmittelkreisläufe 34 bzw. 35 an. Die den Pumpenaggregate 3 und 3' zugeordneten Kühlmittelpumpenversorgungen 6 und 7 sind redundant verschaltet. Die sekundären Kühlmittelkreisläufe 34 und 35 können über Koppelventile 25 und 26 gekoppelt oder entkoppelt werden. Der Antrieb 1 nach FIG 2 ist auch in einem Schiff realisierbar.

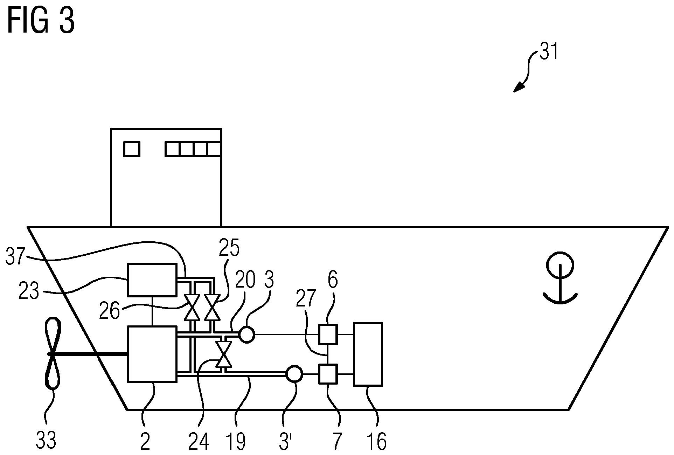

Die Darstellung nach FIG 3 zeigt ein Schiff 31 mit einer elektrischen Maschine 2 zum Antrieb eines Propellers 33. Die elektrische Maschine 2 ist über einen Antriebsstromrichter bestrombar. Die Pumpenaggregate 3 und 3' treiben die Kühlmittelkreisläufe 19 bzw. 20 an. Die Pumpenaggregate 3, 3' sind durch die jeweiligen Kühlmittelpumpenversorgung 6 und 7 bestrombar. Die Kühlmittelpumpenversorgung 6 und 7 werden über die Steuerung 16 gesteuert bzw. geregelt. Über die Kühlmittelkreisläufe 19 und 20 ist die elektrische Maschine 2 kühlbar. Die Kühlmittelkreisläufe 19 und 20 können über ein Koppelventil 24 zusammengeschlossen werden, damit beide Kühlmittelkreisläufe auch nur durch ein Pumpenaggregat 3, 3' betrieben werden können. Um die Kühlleistung bei Ausfall eines Pumpenaggregates nicht um ca. die Hälfte sinken lassen zu müssen, wird das verbleibende in Betrieb befindliche Pumpenaggregat nahe an der maximalen Leistungsgrenze betrieben, obwohl dadurch die Effizienz verschlechtert ist. Auch der Antriebsstromrichter 23 ist an Kühlmittelkreisläufe 19 und 20 angeschlossen. Hierzu sind die Koppelventile 25 und 26 vorgesehen. Über die Koppelventile 25 und 26 ist ein Stromrichterkühlkreislauf 37 mit den Pumpenaggregaten 3 und 3' koppelbar. Der Antrieb des Schiffes 31 nach FIG 3 ist auch in einem U-Boot realisierbar.

## Patentansprüche

1. Antrieb (1) eines wassergebundenen Fortbewegungsmittels, wie ein Unterseeboot (30) oder ein Schiff (31), wobei der Antrieb (1) eine elektrische Maschine (2), eine erste Kühlmittelpumpe (4), eine zweite Kühlmittelpumpe (5), einen ersten Kühlmittelkreislauf (19) und einen zweiten Kühlmittelkreislauf (20) aufweist, wobei die erste Kühlmittelpumpe (4) oder die zweite Kühlmittelpumpe (5) mit dem ersten Kühlmittelkreislauf (19) und mit dem zweiten Kühlmittelkreislauf (20) koppelbar ist, wobei der Antrieb eine erste Kühlmittelpumpenversorgung (6) und eine zweite Kühlmittelpumpenversorgung (7) umfasst, **dadurch gekennzeichnet, dass** die erste Kühlmittelpumpe (4) sowohl mit der ersten Kühlmittelpumpenversorgung (6) betreibbar ist als auch mit der zweiten Kühlmittelpumpenversorgung (7).

2. Antrieb (1) nach Anspruch 1, wobei die zweite Kühlmittelpumpe (5) sowohl mit der ersten Kühlmittelpumpenversorgung (6) betreibbar ist als auch mit der zweiten Kühlmittelpumpenversorgung (7).

3. Antrieb nach einem der vorhergehenden Ansprüche, wobei der erste Kühlmittelkreislauf (19) mit dem zweiten Kühlmittelkreislauf (20) über ein Ventil (24) koppelbar ist.

4. Antrieb (1) nach einem der vorhergehenden Ansprüche, wobei der erste Kühlmittelkreislauf (19) und/oder der zweite Kühlmittelkreislauf (20) zur Kühlung der elektrischen Maschine (2) vorgesehen ist.

5. Antrieb (1) nach einem der vorhergehenden Ansprüche, wobei die erste Kühlmittelpumpenversorgung (6) einen Stromrichter (10) aufweist, welcher mit der ersten Kühlmittelpumpe (4) und/oder mit der zweiten Kühlmittelpumpe (5) verschaltbar ist.

6. Antrieb (1) nach einem der vorhergehenden Ansprüche, wobei die zweite Kühlmittelpumpenversorgung (7) einen weiteren Stromrichter (10) aufweist, welcher mit der ersten Kühlmittelpumpe (4) und/oder mit der zweiten Kühlmittelpumpe (4) verschaltbar ist.

7. Wassergebundenes Fortbewegungsmittels, insbesondere ein Unterseeboot oder ein Schiff, wobei das wassergebundene Fortbewegungsmittel einen Antrieb (1) nach einem der Ansprüche 1 bis 6 aufweist.

8. Verfahren zum Betrieb eines Antriebs (1) nach einem der Ansprüche 1 bis 6, wobei die erste Kühlmittelpumpe (4) oder die zweite Kühlmittelpumpe (5) den ersten Kühlmittelkreislauf (19) und den zweiten Kühlmittelkreislauf (20) mit Kühlmittel beschickt.

9. Verfahren nach Anspruch 8, wobei ein Motor, welcher die Kühlmittelpumpe (4,5) antreibt, welche den ersten Kühlmittelkreislauf (19) und den zweiten Kühlmittelkreislauf (20) beschickt in Überlast betrieben wird.

10. Verfahren nach Anspruch 8 oder 9, wobei ein Pumpenaggregat, welches eine Kühlmittelpumpe (4,5) aufweist, welche den ersten Kühlmittelkreislauf (19) und den zweiten Kühlmittelkreislauf (20) beschickt, mit mehr als 80% der Maximalleistung betrieben wird.

11. Verfahren nach einem der Ansprüche 8 bis 10, wobei ein Pumpenaggregat (3,3'), welches eine Kühlmittelpumpe (4,5) aufweist, welche den ersten Kühlmittelkreislauf (19) und den zweiten Kühlmittelkreislauf (20) beschickt, in einem Bereich betrieben wird in dem der Wirkungsgrad des Pumpenaggregates (3,3') mit einer Zunahme der Leistungsaufnahme sinkt.

12. Verfahren nach einem der Ansprüche 8 bis 11, wobei der Antrieb (1) bei einem Unterseeboot (30) oder Schiff (31) verwendet wird.

## Claims

1. Drive (1) of a waterbound means of transport, such as a submarine (30) or a ship (31), wherein the drive (1) has an electrical machine (2), a first coolant pump (4), a second coolant pump (5), a first coolant circuit (19) and a second coolant circuit (20), wherein the first coolant pump (4) or the second coolant pump (5) can be coupled to the first coolant circuit (19) and to the second coolant circuit (20), wherein the drive comprises a first coolant pump supply (6) and a second coolant pump supply (7), **characterised in that** the first coolant pump (4) can be operated both with the first coolant pump supply (6) and also with the second coolant pump supply (7).

2. Drive (1) according to claim 1, wherein the second coolant pump (5) can be operated both with the first coolant pump supply (6) and also with the second coolant pump supply (7).

3. Drive (1) according to one of the preceding claims, wherein the first coolant circuit (19) can be coupled to the second coolant circuit (20) via a valve (24).

4. Drive (1) according to one of the preceding claims, wherein the first coolant circuit (19) and/or the second coolant circuit (20) is provided to cool the electrical machine (2).

5. Drive (1) according to one of the preceding claims, wherein the first coolant pump supply (6) has a power converter (10) which can be interconnected with the first coolant pump (4) and/or with the second coolant pump (5).

6. Drive (1) according to one of the preceding claims, wherein the second coolant pump supply (7) has a further power converter (10) which can be interconnected with the first coolant pump (4) and/or with the second coolant pump (4).

7. Waterbound means of transport, in particular, a submarine or a ship, wherein the waterbound means of transport has a drive (1) according to one of claims 1 to 6.

8. Method for operating a drive (1) according to one of claims 1 to 6, wherein the first coolant pump (4) or the second coolant pump (5) supplies the first coolant circuit (19) and the second coolant circuit (20) with coolant.

9. Method according to claim 8, wherein a motor which drives the coolant pump (4, 5) which supplies the first coolant circuit (19) and the second coolant circuit (20) is operated at overload.

10. Method according to claim 8 or 9, wherein a pump unit which has a coolant pump (4,5) which supplies the first coolant circuit (19) and the second coolant circuit (20) is operated at more than 80% of maximum output.

11. Method according to one of claims 8 to 10, wherein a pump unit (3,3') which has a coolant pump (4, 5) which supplies the first coolant circuit (19) and the second coolant circuit (20) is operated in a range in which the efficiency of the pump unit (3,3') declines as the power consumption increases.

12. Method according to one of claims 8 to 11, wherein the drive (1) is used in a submarine (30) or a ship (31).

## Revendications

1. Dispositif (1) de propulsion d'un moyen de locomotion marin, comme un sous-marin (30) ou un bateau (31), dans lequel le dispositif (1) de propulsion a une machine (2) électrique, une première pompe (4) de fluide de refroidissement, une deuxième pompe (5) de fluide de refroidissement, un premier circuit (19) de fluide de refroidissement et un deuxième circuit (20) de fluide de refroidissement, dans lequel la première pompe (4) de fluide de refroidissement ou la deuxième pompe (5) de fluide de refroidissement peut être reliée au premier circuit (19) de fluide de refroidissement et au deuxième circuit (20) de fluide de refroidissement, dans lequel
le dispositif de propulsion comprend une première alimentation (6) de pompe en fluide de refroidissement et une deuxième alimentation (7) de pompe en fluide de refroidissement, **caractérisé en ce que** la première pompe (4) de fluide de refroidissement peut fonctionner tant avec la première alimentation (6) de pompe en fluide de refroidissement qu'avec la deuxième alimentation (7) de pompe en fluide de refroidissement.

2. Dispositif (1) de propulsion suivant la revendication 1, dans lequel la deuxième pompe (5) de fluide de refroidissement peut fonctionner tant avec la première alimentation (6) de pompe en fluide de refroidissement qu'avec la deuxième alimentation (7) de pompe en fluide de refroidissement.

3. Dispositif (1) de propulsion suivant l'une des revendications précédentes, dans lequel le premier circuit (19) de fluide de refroidissement peut être couplé au deuxième circuit (20) de fluide de refroidissement par une vanne (24).

4. Dispositif (1) de propulsion suivant l'une des revendications précédentes, dans lequel le premier circuit (19) de fluide de refroidissement et/ou le deuxième circuit (20) de fluide de refroidissement est prévu pour le refroidissement de la machine (2) électrique.

5. Dispositif (1) de propulsion suivant l'une des revendications précédentes, dans lequel la première alimentation (6) de pompe en fluide de refroidissement a un redresseur (10) qui peut être branché sur la première pompe (4) de fluide de refroidissement et/ou sur la deuxième pompe (5) de fluide de refroidissement.

6. Dispositif (1) de propulsion suivant l'une des revendications précédentes, dans lequel la deuxième alimentation (7) de pompe en fluide de refroidissement a un autre redresseur (10) qui peut être branché sur la première pompe (4) de fluide de refroidissement et/ou sur la deuxième pompe (5) de fluide de refroidissement.

7. Moyen de locomotion marin, notamment sous-marin ou bateau, dans lequel le moyen de locomotion marin a un dispositif (1) de propulsion suivant l'une des revendications 1 à 6.

8. Procédé pour faire fonctionner un dispositif (1) de propulsion suivant l'une des revendications 1 à 6, dans lequel la première pompe (4) de fluide de refroidissement ou la deuxième pompe (5) de fluide de refroidissement alimente le premier circuit (19) de fluide de refroidissement et le deuxième circuit (20) de fluide de refroidissement en fluide de refroidissement.

9. Procédé suivant la revendication 8, dans lequel on fait fonctionner en surcharge un moteur, qui entraîne les pompes (4, 5) de fluide de refroidissement, lesquelles alimentent le premier circuit (19) de fluide de refroidissement et le deuxième circuit (20) de fluide de refroidissement.

10. Procédé suivant la revendication 8 ou 9, dans lequel on fait fonctionner à plus de 80% de la puissance maximum un groupe de pompage, qui a une pompe (4, 5) de fluide de refroidissement, laquelle alimente le premier circuit (19) de fluide de refroidissement et le deuxième circuit (20) de fluide de refroidissement.

11. Procédé suivant l'une des revendications 8 à 10, dans lequel on fait fonctionner un groupe (3, 3') de pompage, qui a une pompe (4, 5) de fluide de refroidissement, laquelle alimente le premier circuit (19) de fluide de refroidissement et le deuxième circuit (20) de fluide de refroidissement, dans une plage dans laquelle le rendement du groupe (3, 3') de pompage s'abaisse au fur et à mesure qu'augmente la puissance absorbée.

12. Procédé suivant l'une des revendications 8 à 11, dans lequel on utilise le dispositif (1) de propulsion dans un sous-marin (30) ou dans un bateau (31).
